# EUROPÄISCHE PATENTSCHRIFT

(11) **EP 1 476 329 B1**
(45) Veröffentlichungstag und Bekanntmachung des Hinweises auf die Patenterteilung: **11.05.2005**
(21) Anmeldenummer: 03702384.3
(22) Anmeldetag: 03.01.2003
(51) Int. Cl.: B60R 16/02

(54) **LENKEINRICHTUNG MIT BERÜRUNGSLOSER DATENÜBERTRAGUNG ZWISCHEN LENKRAD UND GRUNDTEIL**
STEERING DEVICE INCLUDING CONTACTLESS DATA TRANSMISSION BETWEEN STEERING WHEEL AND BASIC PART
DISPOSITIF DE DIRECTION COMPRENNANT DE TRANSMISSION DE DONNEES SANS CONTACT ENTRE VOLANT ET PARTIE FIXE

(30) Priorität: 20.02.2002 DE 10207720
(43) Veröffentlichungstag der Anmeldung: 17.11.2004
(73) Patentinhaber: Valeo Schalter und Sensoren GmbH, 74321 Bietigheim-Bissingen (DE)
(72) Erfinder: POSLOWSKY, Georg, 74348 Lauffen (DE)
(74) Vertreter: Steimle, Josef, Dipl.-Ing.
(86) Internationale Anmeldenummer: PCT/EP2003/000024
(87) Internationale Veröffentlichungsnummer: WO 2003/070525

(56) Entgegenhaltungen:
- EP-A- 0 543 483
- DE-A- 19 643 451
- US-A- 4 456 903
- US-A- 4 988 973

## Beschreibung

Die Erfindung betrifft eine Lenkeinrichtung mit den Merkmalen des Oberbegriffs des Anspruchs 1.

Als Mittel zur Übertragung von Daten zwischen dem Lenkrad und dem Grundteil sind Wickelfedern, die gelegentlich auch als Kontaktspiralen bezeichnet werden, bekannt. Sie dienen dazu, an dem Lenkrad vorhandene Schalter, Sensoren oder sonstige elektrische oder elektronische Bauteile, die mit dem Lenkrad drehfest verbunden sind, über elektrische Leitungen mit anderen elektrischen oder elektronischen Bauteilen oder auch Auswerteeinheiten zu verbinden, die nicht der Drehbewegung des Lenkrades folgen. Dazu weist eine solche Wickelfeder in der Regel eine Vielzahl von nebeneinander liegenden, gegenseitig isolierten Leiterbahnen auf. Mit ihrem einen Ende ist die Wickelfeder an dem drehbaren Lenkrad und mit ihrem anderen Ende ortsfest und damit nicht der Drehbewegung des Lenkrads folgend an dem Grundteil angeordnet. Bei Drehung des Lenkrades in die eine Richtung wird die Wickelfeder spiralförmig aufgewickelt, bei Drehung in die andere Richtung abgewickelt. Die Wickelfeder ist dabei so ausgelegt und angeordnet, dass sie das Lenkverhalten des Lenkrades nicht beeinträchtigt. Derartige Wickelfedern verarsuchen jedoch beim Lenken Geräusche und weisen eine ungeeignete elektromagnetische Verträglichkeit (EMV-Probleme) auf. Ferner unterliegen die im Lenkrad verwendeten Schalter und/oder Taster aufgrund ihrer mechanischen Kontakte einem Verschleiß.

Aus der US 4 456 903 A ist eine gattungsgemäße Lenkeinrichtung für Fahrzeuge bekannt, mit einem drehbaren Lenkrad und mit einem gegenüber dem Lenkrad nicht drehbaren Grundteil, sowie Mittel zur Übertragung von Daten zwischen dem Lenkrad und dem Grundteil, wobei die Mittel die Daten in Form von Lichtsignalen zwischen dem Lenkrad und dem Grundteil berührungslos übertragen. Die Mittel umfassen wenigstens eine Lichtsendeeinheit und wenigstens eine Lichtempfängereinheit zur Übertragung der Lichtsignale.

Zwar ist aus der US 4 988 973 A eine Lenkeinrichtung mit Lichtsender und Lichtempfängern auf der Lenksäulenseite und mit optischen Lichtschaltern im Lenkrad bekannt. Bei der Lenkeinrichtung handelt es sich allerdings um eine Konstruktion, mit einem drehbeweglichen Lenkradkranz mit einem bezüglich des Fahrzeugs feststehenden Lenkradtopf, so dass hier nicht eine Übertragung von einem feststehenden auf ein vollständig drehbares Teil der Lenkung vorliegt, sondern eine Übertragung von zwei zu einander und bezüglich des Fahrzeugs drehfest angeordneten Teilen durch ein drehbares, den Lenkradkranz führendes, Teil hindurch, was mit einem erheblichen Mehraufwand verbunden ist.

Der vorliegenden Erfindung liegt deshalb die Aufgabe zugrunde, den Aufwand bei der Signalverarbeitung in einer Lenkeinrichtung mit Datenübertragung zwischen einem drehbaren und einem feststehend Teil weiter zu optimieren.

Diese Aufgabe wird mit einer Lenkeinrichtung gelöst, die die Merkmale des Anspruchs 1 aufweist. Vorteilhafte Ausgestaltungen ergeben sich aus den Unteransprüchen.

Da die Datenübertragung berührungslos erfolgt, entfällt eine einem Verschleiß unterliegende mechanische Kontaktierung. Außerdem verursachen bei Drehung des Lenkrades die Mittel zur Datenübertragung keine Geräusche.

Die Mittel zur Übertragung der Daten umfassen wenigstens eine Lichtsendeeinheit und wenigstens eine Lichtempfängereinheit. Die von der Lichtsendeeinheit ausgesendeten Lichtsignale können dabei vorteilhafterweise über Lichtleiter und/Lichtfinger transportiert werden. Ferner kann mittels Lichtleiter und/oder Lichtfinger eine Umlenkung der Lichtsignale in die gewünschte Richtung realisiert werden. Die Lichtleiter und/oder Lichtfinger können dazu aus einem flexiblen Material sein.

Bei der Erfindung sind wenigstens eine Lichtsendeeinheit und wenigstens eine Lichtempfängereinheit grundteilseitig angeordnet, wobei die Lichtsignale von der Lichtsendeeinheit zu dem Lenkrad und von dem Lenkrad zu der Lichtempfängereinheit jeweils berührungslos optisch übertragen werden. Dabei sind im Lenkrad Lichtschalter und/oder Lichttaster angeordnet, die zur Schaltung der das Lenkrad passierenden Lichtsignale geeignet sind. Die Lichtsignale werden folglich von dem der Drehung des Lenkrades nicht folgenden Grundteil berührungslos zu dem Lenkrad gesandt. Dort werden sie von Lichtschaltern bzw. Lichttastern beeinflusst oder unterbrochen und werden über entsprechende Lichtleiter bzw. Lichtfinger von dem drehbaren Lenkrad zu dem nicht drehbaren Grundteil berührungslos optisch übertragen. Bei einer derartigen Ausführungsform kann auf elektrische oder elektronische Bauteile im Lenkrad weitgehend oder ganz verzichtet werden.

Eine weitere, bevorzugte Ausführungsform der Erfindung zeichnet sich dadurch aus, dass vorzugsweise eine Lichtsendeeinheit vorhanden ist, wobei die Lichtsignale der Lichtsendeeinheit im Lenkrad aufgefächert werden und die aufgefächerten Lichtsignale Lichtschalter und/oder Lichttaster passieren. Dies hat den Vorteil, dass lediglich eine Lichtsendeeinheit vorzusehen ist. Aufgrund der Auffächerung der Lichtsignale kann dennoch eine Vielzahl von Lichtschaltern und/oder Lichttastern bedient werden.

Eine weitere vorteilhafte Ausführungsform der Erfindung ergibt sich dann, wenn die Lichtsignale codiert werden. Bei einer derartigen Codierung werden entsprechend codierte Lichtsignale entsprechenden Lichtschaltern und/oder Lichttastern zugeordnet. Dies hat den Vorteil, dass die Zahl der Empfängereinheiten auch bei einer Vielzahl von Lichtschaltern und/oder Lichttastern gering gehalten werden kann. Idealerweise ist lediglich eine Empfängereinheit vorgesehen, die die entsprechend codierten Lichtsignale empfängt.

Eine Codierung kann beispielsweise durch spektrales Zerlegen der Lichtsignale realisiert werden. Eine derartige Zerlegung kann insbesondere beim Auffächern der Lichtsignale erfolgen. Denkbar ist außerdem, dass die Lichtsignale zur Codierung entsprechend gepulst werden. Verschiedene Frequenzbereiche der gepulsten Lichtsignale können verschiedenen Lichtschaltern und/oder Lichttastern zugeordnet werden.

Bei keiner Codierung der Lichtsignale sind die einzelnen Lichtschalter und/oder Lichttaster mit verschiedenen Lichtempfängereinheiten optisch verbunden. Dabei kann jeder Lichtschalter bzw. Lichttaster einer Lichtempfängereinheit zugeordnet werden. Bei entsprechender Codierung der Lichtsignale kann die Anzahl der Lichtempfängereinheiten reduziert werden.

Eine weitere, bevorzugte Ausführungsform der Erfindung ergibt sich dann, wenn die grundteilseitige Lichtsendeeinheit Lichtsignale berührungslos in einen lenkradseitigen, um die Drehachse des Lenkrades angeordneten, Lichtleiterring sendet, der mit den Lichtschaltern und/oder Lichttastern optisch verbunden ist. Bei einer Drehung des Lenkrades wird folglich der Lichtleiterring mit vorzugsweise konstantem Abstand an der Lichtsendeeinheit vorbeigeführt. Dadurch wird gewährleistet, dass die Lichtsendeeinheit bei jeder Drehstellung des Lenkrades Lichtsignale in den Lichtleiterring und damit zu den Lichtschaltern und/oder Lichttastern sendet. Die optische Verbindung von dem Lichtleiterring mit den Lichtschaltern und/oder Lichttastern wird insbesondere durch entsprechende Lichtfinger oder Lichtleiter realisiert.

Dabei kann erfindungsgemäß vorgesehen sein, dass wenigstens ein und vorzugsweise mehrere lenkradseitige, um die Drehachse des Lenkrades angeordnete Lichtleiterringe vorgesehen sind, in die die von den Lichtschaltern und/oder Lichttastern kommenden Signale geleitet werden. Bei einer Codierung der Lichtsignale kann ein Lichtleiterring zur Aufnahme der von den Lichtschaltern und/oder Lichttastern kommenden Signale genügen. Wird keine Codierung vorgenommen, so ist grundsätzlich für jeden Lichtschalter bzw. Lichttaster ein eigener Lichtleiterring vorzusehen.

Der oder die der Drehbewegung des Lenkrades folgenden Lichtleiterringe werden erfindungsgemäß von grundteilseitigen Lichtempfängereinheiten berührungslos gespeist oder abgetastet. Bei einer Codierung der Lichtsignale kann es ausreichend sein, lediglich eine grundteilseitige Lichtempfängereinheit vorzusehen. Werden mehrere Lichtleiterringe verwendet, so kann für jeden Lichtleiterring eine Lichtempfängereinheit vorgesehen werden.

Das Speisen oder Abtasten der Lichtleiterringe durch die Lichtempfängereinheiten kann entweder unmittelbar oder mittelbar, insbesondere über Lichtfinger, erfolgen. Wichtig ist, dass die Abtastung über eine volle Umdrehung des Lenkrades gewährleistet wird.

Die Lichtleiterringe können entweder entlang der Drehachse nebeneinander oder in einer Ebene konzentrisch um die Drehachse angeordnet sein. Entsprechend kann die vorzugsweise eine Lichtsendeeinheit und die Lichtempfängereinheit radial oder axial neben den jeweiligen Lichtleiterringen angeordnet sein.

Um eine kompakte Bauweise im Bereich der Lenkeinrichtung zu erreichen, ist erfindungsgemäß denkbar, dass die Lichtleiterringe als Teil einer mit dem Lenkrad drehgekoppelten Codescheibe einer Lenkwinkelmesseinrichtung ausgebildet sind.

Bei einer weiteren, ebenfalls bevorzugten Ausführungsform der Erfindung ist vorgesehen, dass die Lichtsendeeinheit Lichtsignale in einen grundteilseitig, um die Drehachse des Lenkrades angeordneten Lichtleiterring sendet, der von wenigstens einem lenkradseitigen, mit den Lichtschaltern und/oder Lichttastern optisch verbundenen Lichtfinger berührungslos abgetastet wird. Bei dieser Ausführungsform ist der mit der Lichtsendeeinheit optisch gekoppelte Lichtleiterring grundteilseitig, d.h. nicht der Drehbewegung des Lenkrades folgend, angeordnet. Vielmehr wird dieser Lichtleiterring von einem der Drehbewegung des Lenkrades folgenden Lichtfinger berührungslos abgetastet. Dies hat den Vorteil, dass die Anzahl der rotierenden Bauteile verringert wird.

Vorteilhafterweise sind wenigstens ein und vorzugsweise mehrere lenkradseitige Lichtfinger vorgesehen, die die von den Lichtschaltern und/oder Lichttastern kommenden Lichtsignale berührungslos in um die Drehachse des Lenkrades angeordnete Lichtleiterringe senden. Dies hat den Vorteil, dass die die geschalteten Lichtsignale empfangenden Lichtleiterringe ebenfalls grundteilseitig angeordnet sind. Auch hierdurch wird die Anzahl der rotierenden Teile reduziert.

Vorteilhafterweise sind die Lichtleiterringe auf konzentrischen Kreisen um die Lenkachse in einer Ebene angeordnet. Sie können dabei auf dem Grundteil angeordnet oder in das Grundteil integriert sein. Das Grundteil kann hierbei insbesondere als Leiterplatte ausgebildet sein.

Als Lichtsendeeinheiten haben sich insbesondere LEDs bewährt. Als Lichtempfängereinheiten finden bevorzugterweise Phototransistoren Verwendung. Die LEDs und/oder die Phototransistoren sind dabei vorteilhafterweise unmittelbar oder mittelbar auf dem als Leiterplatte ausgebildeten Grundteil angeordnet.

Weitere vorteilhafte Ausgestaltungen und Einzelheiten sind der nachfolgenden Beschreibung zu entnehmen, in der die Erfindung anhand der in der Zeichnung dargestellten Ausführungsbeispiele näher beschrieben und erläutert ist.

In der Zeichnung zeigen:
- Fig. 1:: eine erste erfindungsgemäße Lenkeinrichtung in teilperspektivischer Seitenansicht;
- Fig. 2:: eine zweite erfindungsgemäße Lenkeinrichtung; und
- Fig. 3:: eine dritte erfindungsgemäße Lenkeinrichtung.

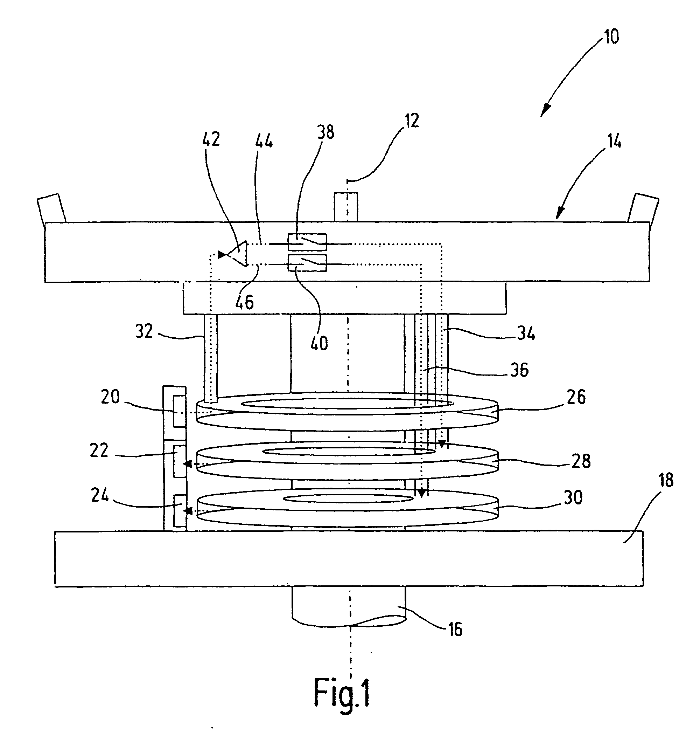

Die in der Fig. 1 gezeigte Lenkeinrichtung 10 umfasst ein um eine Lenkachse 12 drehbar angeordnetes Lenkrad 14, das auf dem freien Ende einer Lenkstange 16 befestigt ist. Die Lenkeinrichtung 10 umfasst ferner ein Grundteil 18, das fahrzeugseitig angeordnet ist und der Drehbewegung des Lenkrades 14 nicht folgt. Die Lenkeinrichtung 10 weist ferner Mittel zur Übertragung von Daten in Form von Lichtsignalen zwischen dem Lenkrad 14 und dem Grundteil 18 auf. Die Mittel umfassen hierbei eine grundteilseitige Lichtsendeeinheit 20, zwei grundteilseitige Lichtempfängereinheiten 22 und 24, lenkradseitige Lichtleiterringe 26, 28, 30, und Lichtleiter 32, 34, 36. Im Lenkrad 14 sind Lichtschalter 38 und 39 dargestellt, die von der das Lenkrad 14 betätigenden Person betätigt werden können.

Über die Lichtsendeeinheit 20 werden Lichtsignale, die in den Figuren als punktierte Linien dargestellt sind, in den lenkradseitigen Lichtleiterring 26 berührungslos gesendet. Von dem Lichtleiterring 26 werden die Signale über den Lichtleiter 32 einer Auffächereinheit 42 zugeleitet, in der die Lichtsignale 32 in zwei Lichtsignalzweige 44 und 46 aufgefächert werden. Über die Zweige 44, 46 werden die Lichtsignale den Lichtschaltern 38 und 40 zugeleitet. Die Lichtschalter 38, 40 schalten bzw. beeinflussen die Lichtsignale. Die aus dem Lichtschalter 38 austretenden Lichtsignale werden über den Lichtleiter 34 in den Lichtleiterring 28 gesendet. Der Lichtleiterring 28 wird von der Empfängereinheit 22 berührungslos abgetastet. Entsprechend werden über den Lichtleiter 36 die den Lichtschalter 40 verlassenden Lichtsignale dem Lichtleiterring 30 zugeführt, der von der Lichtempfängereinheit 24 berührungslos abgetastet wird. Durch Vergleich der gesendeten Lichtsignale und der empfangenen Lichtsignale kann bestimmt werden, ob einer der Lichtschalter 38, 40 betätigt ist. Die Auswertung erfolgt über eine nicht dargestellte Auswerteeinheit.

Gemäß Fig. 1 durchgreifen die zu der Lenkachse 12 koaxial angeordneten Lichtleiter 34 und 36 den Lichtleiterring 26. Der Lichtleiter 36, der zu dem Lichtleiterring 30 führt, durchgreift den Lichtleiterring 28. In der Fig. 1 sind die Lichtleiterringe 26, 28, 30 zueinander beabstandet angeordnet. Denkbar ist, dass die Lichtleiterringe 26, 28, 30 unmittelbar aneinander angrenzen, wobei zwischen den Ringen ein Lichtübergang verhindert wird. Dadurch kann die Einrichtung relativ flach bauen.

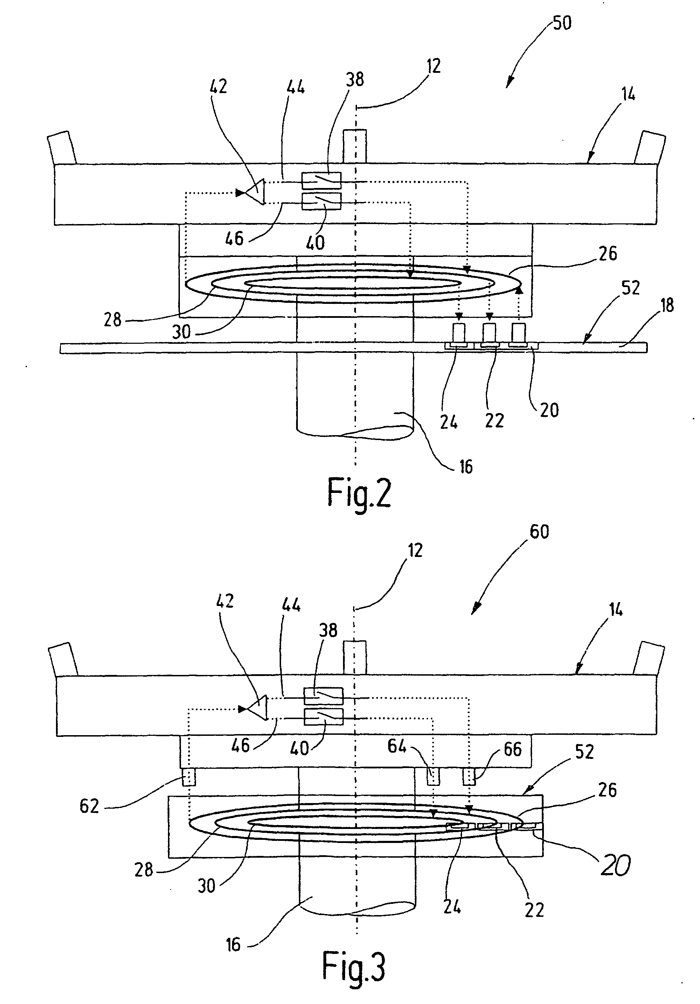

In der Fig. 2 ist eine zweite erfindungsgemäße Lenkeinrichtung 50 und in der Fig. 3 eine dritte erfindungsgemäße Lenkeinrichtung 60 gezeigt. Teile der Lenkeinrichtungen 50 und 60, die Teilen der Lenkeinrichtung 10 entsprechen, sind mit gleichen Bezugszahlen versehen.

Die Lenkeinrichtung 50 gemäß Fig. 2 entspricht weitgehend der Lenkeinrichtung 10 gemäß Fig. 1. Auch bei dieser Ausführungsform sind die drei Lichtleiterringe 26, 28, 30 lenkradseitig angeordnet. Allerdings liegen die Lichtleiterringe in einer Ebene und sind konzentrisch um die Lenkachse 12 angeordnet. Die Sendeeinheit 20 und die beiden Empfängereinheiten 22, 24 sind auf dem Grundteil 18 nebeneinander angeordnet, das in der Ausführungsform gemäß Fig. 2 als Leiterplatte 52 ausgebildet ist. Auf der Leiterplatte 52 können weitere elektrische oder elektronische Bauteile vorgesehen sein, wie beispielsweise die Auswerteeinheit zur Auswertung der empfangenen Lichtsignale.

Bei der Lenkeinrichtung 60 gemäß Fig. 3 sind im Gegensatz zu den Lenkeinrichtungen 10 und 50 die Lichtleiterringe 26, 28, 30 nicht lenkradseitig, sondern grundteilseitig angeordnet.

Das Grundteil ist hierbei als Leiterplatte 52 ausgebildet, in die die Lichtleiterringe 26, 28, 30 integriert sind. Die Sendeeinheit 20 und die Empfängereinheiten 22, 24 sind auf der Leiterplatte 52 angeordnet. Zur berührungslosen Übertragung der Lichtsignale zwischen Lenkrad 14 und Leiterplatte 52 weist das Lenkrad 14 insgesamt drei Lichtfinger 62, 64, 66 auf, wobei der Lichtfinger 62 während der Umdrehung des Lenkrades 14 auf den Lichtleiterring 26 gerichtet ist. Die beiden Lichtfinger 64 und 66 weisen auf die Lichtleiterringe 28 und 30.

Bei den in den Fig. 1 - 3 dargestellten Lenkeinrichtungen 10, 50, 60 sind jeweils ein Lichtsender 20 und zwei Lichtempfänger 22, 24 vorgesehen. Je nach Anzahl der vorgesehenen Lichtschalter 38, 40 können zusätzliche Sende- oder Empfängereinheiten vorgesehen werden. Die Anzahl der Lichtleiterringe kann sich dementsprechend erhöhen.

Erfindungsgemäß ist ebenfalls denkbar, dass die Lichtsignale codiert versendet werden. Einer entsprechenden Codierung kann hierbei ein entsprechender Lichtschalter zugeordnet werden. Zur Codierung können die Lichtsignale beispielsweise gepulst oder spektral zerlegt werden. Eine Codierung der Lichtsignale hat den Vorteil, dass mit einer geringen Anzahl von Lichtleiterringen bzw. Leiterzweigen eine hohe Anzahl von Lichtschaltern oder Lichttastern versorgt werden kann.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Lenkeinrichtung (10, 50, 60), insbesondere für Fahrzeuge, mit einem drehbaren Lenkrad (14) und mit einem gegenüber dem Lenkrad (14) nicht drehbaren Grundteil (18, 52), wobei Mittel zur Übertragung von Daten zwischen dem Lenkrad (14) und dem Grundteil (18, 52) vorgesehen sind, und wobei die Mittel derart ausgebildet sind, dass sie die Daten in Form von Lichtsignalen zwischen dem Lenkrad (14) und dem Grundteil (18, 52) berührungslos übertragen, wobei die Mittel wenigstens eine Lichtsendeeinheit (20) und wenigstens eine Lichtempfängereinheit (22, 24) zur Übertragung von Lichtsignalen umfassen, **dadurch gekennzeichnet, dass** im Lenkrad (14) von der das Lenkrad (14) betätigenden Person betätigbare, die Lichtsignale schaltende bzw. beeinflussende Lichtschalter und/oder Lichttaster (38, 40) angeordnet sind und dass wenigstens eine Lichtsendeeinheit (20) und wenigstens eine Lichtempfängereinheit (22, 24) grundteilseitig angeordnet sind, wobei die Lichtsignale von der Lichtsendeeinheit (20) zu dem Lenkrad (14) und von dem Lenkrad (14) zu der Lichtempfängereinheit (22, 24) jeweils berührungslos optisch übertragen werden.

2. Einrichtung nach Anspruch 1 , **dadurch gekennzeichnet, dass** die Mittel Lichtleiter (26, 28, 30, 32, 34, 36) und/oder Lichtfinger (62, 64, 66) umfassen.

3. Einrichtung nach Anspruch 1 oder 2, **dadurch gekennzeichnet, dass** die Lichtsignale der Lichtsendeeinheit (20) im Lenkrad (14) aufgefächert (42) werden und die aufgefächerten Lichtsignale die Lichtschalter und/oder Lichttaster (38, 40) passieren.

4. Einrichtung nach einem der vorhergehenden Ansprüche, **dadurch gekennzeichnet, dass** die Lichtsignale codiert werden.

5. Einrichtung nach Anspruch 4 **dadurch gekennzeichnet, dass** die Lichtsignale zur Codierung spektral zerlegt werden.

6. Einrichtung nach Anspruch 4 oder 5, **dadurch gekennzeichnet, dass** die Lichtsignale zur Codierung entsprechend gepulst werden.

7. Einrichtung nach einem der vorhergehenden Ansprüche, **dadurch gekennzeichnet, dass** die Lichtschalter und/oder Lichttaster (38, 40) mit verschiedenen Lichtempfängereinheiten (22, 24) optisch verbunden sind.

8. Einrichtung nach einem der vorhergehenden Ansprüche, **dadurch gekennzeichnet, dass** die Lichtsendeeinheit (20) Lichtsignale berührungslos in einen lenkradseitigen, um die Drehachse des Lenkrades abgeordneten, Lichtleiterring (26) sendet, der mit den Lichtschaltern und/oder Lichttastern (38, 40) optisch verbunden ist.

9. Einrichtung nach Anspruch 8, **dadurch gekennzeichnet, dass** wenigstens ein und vorzugsweise mehrere lenkradseitige, um die Drehachse des Lenkrades angeordnete Lichtleiterringe (28, 30) vorgesehen sind, in die die von den Lichtschaltern und/oder Lichttastern (38, 40) kommenden Signale geleitet werden.

10. Einrichtung nach Anspruch 8 oder 9, **dadurch gekennzeichnet, dass** der oder die Lichtleiterringe (26, 28, 30) von grundteilseitigen Lichtempfängereinheiten berührungslos abgetastet werden.

11. Einrichtung nach einem der Ansprüche 8 bis 10, **dadurch gekennzeichnet, dass** das Speisen oder Abtasten unmittelbar oder mittelbar, insbesondere über Lichtfinger, erfolgt.

12. Einrichtung nach einem der Ansprüche 8 bis 11, **dadurch gekennzeichnet, dass** die Lichtleiterringe (26, 28, 30) entlang der Drehachse (12) nebeneinander angeordnet sind.

13. Einrichtung nach einem der Ansprüche 8 bis 12, **dadurch gekennzeichnet, dass** die Außenradien der Lichtleiterringe (26, 28, 30) wenigstens weitgehend gleich sind.

14. Einrichtung nach einem der Ansprüche 8 bis 11, **dadurch gekennzeichnet, dass** die Lichtleiterringe (26, 28, 30) in einer Ebene konzentrisch um die Drehachse (12) angeordnet sind.

15. Einrichtung nach einem der Ansprüche 8 bis 14, **dadurch gekennzeichnet, dass** die Lichtsendeeinheit (20) und die Lichtempfängereinheit (22, 24) radial oder axial neben den Lichtleiterringen (26, 28, 30) angeordnet sind.

16. Einrichtung nach einem der Ansprüche 8 bis 15, **dadurch gekennzeichnet, dass** die Lichtleiterringe (26, 28, 30) als Teil einer mit dem Lenkrad (14) drehgekoppelten Codescheibe einer Lenkwinkelmesseinrichtung ausgebildet sind.

17. Einrichtung nach einem der Ansprüche 1 bis 7, **dadurch gekennzeichnet, dass** die Lichtsendeeinheit (20) Lichtsignale in einen grundteilseitig, um die Drehachse des Lenkrades angeordneten Lichtleiterring (26) sendet, der von wenigstens einem lenkradseitigen, mit den Lichtschaltern und/oder Lichttastern (38, 40) optisch verbundenen Lichtfinger (62) berührungslos abgetastet wird.

18. Einrichtung nach Anspruch 17, **dadurch gekennzeichnet, dass** wenigstens ein und vorzugsweise mehrere lenkradseitige Lichtfinger (64, 66) vorgesehen sind, die die von den Lichtschaltern und/oder Lichttastern (38, 40) kommenden Lichtsignale berührungslos in um die Drehachse (12) des Lenkrades (14) angeordnete grundteilseitige Lichtleiterringe (28, 30) senden.

19. Einrichtung nach Anspruch 17 oder 18, **dadurch gekennzeichnet, dass** die Lichtleiterringe (26, 28, 30) auf konzentrischen Kreisen um die Lenkachse (12) in einer Ebene angeordnet sind.

20. Einrichtung nach Anspruch 17, 18 oder 19, **dadurch gekennzeichnet, dass** die Lichtleiterringe (26, 28, 30) auf dem Grundteil (18, 52) angeordnet oder in das Grundteil (18, 52) integriert sind.

21. Einrichtung nach einem der vorhergehenden Ansprüche, **dadurch gekennzeichnet, dass** die wenigstens eine Lichtsendeeinheit (20) als LED oder als Phototransistor ausgebildet ist.

22. Einrichtung nach Anspruch 21, **dadurch gekennzeichnet, dass** das Grundteil (18) eine Leiterplatte (52) ist, auf der die LED (20) und/oder Phototransistoren (22, 24) unmittelbar oder mittelbar angeordnet sind.

## Claims

1. Steering device (10, 50, 60), in particular for vehicles, comprising a rotatable steering wheel (14) and a base part (18, 52) which does not rotate along with the steering wheel (14), wherein means are provided for transmitting data between the steering wheel (14) and the base part (18, 52), and wherein the means are designed such that they transmit data between the steering wheel (14) and the base part (18, 52) in a contact-free manner using light signals, wherein the means comprise a light transmitting unit (20) and at least a light receiving unit (22, 24) for transmitting of light signal,
**characterized in that** in the steering wheel (14) sight switches and/or light buttons (38, 40), which can be activated or controlled by the person actuating the steering wheel (14) are arranged, and that at least one light transmitting unit (20) and at least one light receiving unit (22, 24) are disposed on the base part side, wherein the light signals are optically transmitted from the light transmitting unit (20) to the steering wheel (14) and from the steering wheel (14) to the light receiving unit (22, 24), each in a contact-free manner.

2. Device according to claim 1, **characterized in that** the the means comprise light guides (26, 28, 30, 32, 34, 36) and/or light fingers (62, 64, 66).

3. Device according to claim 1 or 2, **characterized in that**, the light signals of the light transmitting unit (20) are fanned-out (42) in the steering wheel (14) and the fanned-out light signals pass light switches and/or light buttons (38, 40).

4. Device according to any one of the preceding claims, **characterized in that** the light signals are encoded.

5. Device according to claim 4, **characterized in that** the light signals are spectrally separated for encoding.

6. Device according to claim 4 or 5, **characterized in that** the light signals are appropriately pulsed for encoding.

7. Device according to any one of the preceding claims, **characterized in that** the light switches and/or light buttons (38, 40) are optically connected to different light receiving units (22, 24).

8. Device according to any one of the preceding claims, **characterized in that** the light transmitting unit (20) transmits light signals in a contact-free manner into a light guide ring (26) disposed around the axis of rotation of the steering wheel on the steering wheel side, the light guide ring (26) being optically connected to the light switches and/or light buttons (38, 40).

9. Device according to claim 8, **characterized in that** at least one and preferably several light guide rings (28, 30) are provided about the axis of rotation of the steering wheel on the steering wheel side, into which the signals from the light switches and/or light buttons (38, 40) are guided.

10. Device according to claim 8 or 9, **characterized in that** the light guide ring(s) (26, 28, 30) is/are scanned in a contact-free manner using light receiving units on the base part side.

11. Device according to any one of the claims 8 through 10, **characterized in that** feeding or scanning is carried out directly or indirectly, in particular via light fingers.

12. Device according to any one of the claims 8 through 11, **characterized in that** the light guide rings (26, 28, 30) are disposed next to each other along the axis of rotation (12).

13. Device according to any one of the claims 8 through 12, **characterized in that** the outer radii of the light guide rings (26, 28, 30) are at least largely identical.

14. Device according to any one of the claims 8 through 11, **characterized in that** the light guide rings (26, 28, 30) are disposed concentrically about the axis of rotation (12), in one plane.

15. Device according to any one of the claims 8 through 14, **characterized in that** the light transmitting unit (20) and the light receiving unit (22, 24) are disposed radially or axially next to the light guide rings (26, 28, 30).

16. Device according to any one of the claims 8 through 15, **characterized in that** the light guide rings (26, 28, 30) are designed as part of a code disc of a steering angle measuring means, which is rotationally coupled with the steering wheel (14).

17. Device according to any one of the claims 1 through 7, **characterized in that** the light transmitting unit (20) transmits light signals into a light guide ring (26) disposed about the axis of rotation of the steering wheel on the base part side, which is scanned in a contact-free manner by at least one light finger (62) optically connected to the light switches and/or light buttons (38, 40).

18. Device according to claim 17, **characterized in that** at least one and preferably several light fingers (64, 66) are disposed on the steering wheel side to transmit the light signals in a contact-free manner from the light switches and/or light buttons (38, 40) to light guide rings (28, 30) disposed about the axis of rotation (12) of the steering wheel (14) on the base part side.

19. Device according to claim 17 or 18, **characterized in that** the light guide rings (26, 28, 30) are disposed in one plane in concentric circles about the steering axis (12).

20. Device according to claim 17, 18 or 19, **characterized in that** the light guide rings (26, 28, 30) are disposed on the base part (18, 52) or are integrated in the base part (18, 52).

21. Device according to any one of the preceding claims, **characterized in that** the at least one light transmitting unit (20) is designed as a LED or as a photo transistor.

22. Device according to claims 21, **characterized in that** the base part (18) is a printed circuit board (52) on which the LED (20) and/or photo transistors (22, 24) are disposed either directly or indirectly.

## Revendications

1. Dispositif de direction (10, 50, 60), en particulier pour véhicules automobiles, avec un volant de direction (14) et avec une partie de base (18, 52) non rotative par rapport au volant de direction (14), dans lequel des moyens sont prévus pour la transmission de données entre le volant de direction (14) et la partie de base (18, 52), et dans lequel les moyens sont conçus de telle manière qu'ils transmettent les données entre le volant de direction (14) et la partie de base (18, 52) dans contact, sous forme de signaux optiques, dans lequel les moyens comportent au moins une unité d'émission optique (20) et au moins une unité de réception optique (22, 24) pour la transmission des signaux optiques, **caractérisé en ce que** des commutateurs d'éclairage et/ou des palpeurs d'éclairage (38, 40) actionnables par la personne manoeuvrant le volant de direction (14), commutant ou influençant les signaux optiques, sont installés sur le volant de direction (14) et **en ce qu'**au moins une unité d'émission optique (20) et au moins une unité de réception optique (22, 24) sont placées du côté de la partie de base, les signaux optiques étant transmis optiquement sans contact entre l'unité d'émission optique (20) et le volant de direction (14) et entre le volant de direction (14) et l'unité de réception optique (22, 24).

2. Dispositif selon la revendication 1, **caractérisé en ce que** les moyens comprennent des fibres optiques (26, 28, 30, 32, 34, 36) et/ou des doigts optiques (62, 64, 66).

3. Dispositif selon la revendication 1 ou 2, **caractérisé en ce que** les signaux optiques de l'unité d'émission optique (20) sont dispersés (42) dans le volant de direction (14) et les signaux optiques dispersés passent par les commutateurs d'éclairage et/ou les palpeurs d'éclairage (38, 40).

4. Dispositif selon l'une quelconque des revendications précédentes, **caractérisé en ce que** les signaux optiques sont codés.

5. Dispositif selon la revendication 4, **caractérisé en ce que** les signaux optiques sont soumis à une analyse spectrale pour le codage.

6. Dispositif selon la revendication 4 ou 5, **caractérisé en ce que** les signaux optiques sont pulsés de manière appropriée pour le codage.

7. Dispositif selon l'une quelconque des revendications précédentes, **caractérisé en ce que** les commutateurs d'éclairage et/ou les palpeurs d'éclairage (38, 40) sont reliés optiquement à différentes unités de réception optique (22, 24).

8. Dispositif selon l'une quelconque des revendications précédentes, **caractérisé en ce que** l'unité d'émission optique (20) envoie des signaux optiques sans contact dans un anneau de fibres optiques (26) placé du côté du volant de direction autour de l'axe de rotation du volant de direction qui est relié optiquement aux commutateurs d'éclairage et/ou aux palpeurs d'éclairage (38, 40).

9. Dispositif selon la revendication 8, **caractérisé en ce qu'**il est prévu au moins un et, de préférence, plusieurs anneaux de fibres optiques (28, 30) placés du côté du volant de direction autour de l'axe de rotation du volant de direction, dans lesquels sont dirigés les signaux provenant des commutateurs d'éclairage et/ou des palpeurs d'éclairage (38, 40).

10. Dispositif selon la revendication 8 ou 9, **caractérisé en ce que** le ou les anneaux de fibres optiques (26, 28, 30) est ou sont balayé(s) sans contact par des unités de réception optique placées du côté de la partie de base.

11. Dispositif selon l'une quelconque des revendications 8 à 10, **caractérisé en ce que** l'alimentation ou le balayage se fait directement ou indirectement, en particulier par l'intermédiaire de doigts optiques.

12. Dispositif selon l'une quelconque des revendications 8 à 11, **caractérisé en ce que** les anneaux de fibres optiques (26, 28, 30) sont placés les uns à côté des autres le long de l'axe de rotation (12).

13. Dispositif selon l'une quelconque des revendications 8 à 12, **caractérisé en ce que** les rayons extérieurs des anneaux de fibres optiques (26, 28, 30) sont au moins largement identiques.

14. Dispositif selon l'une quelconque des revendications 8 à 11, **caractérisé en ce que** les anneaux de fibres optiques (26, 28, 30) sont placés concentriquement dans un plan autour de l'axe de rotation (12).

15. Dispositif selon l'une quelconque des revendications 8 à 14, **caractérisé en ce que** l'unité d'émission optique (20) et l'unité de réception optique (22, 24) sont placées radialement ou axialement à côté des anneaux de fibres optiques (26, 28, 30).

16. Dispositif selon l'une quelconque des revendications 8 à 15, **caractérisé en ce que** les anneaux de fibres optiques (26, 28, 30) sont configurés comme une partie d'un disque de codage d'un dispositif de mesure d'angle de direction couplé en rotation au volant de direction (14).

17. Dispositif selon l'une quelconque des revendications 1 à 7, **caractérisé en ce que** l'unité d'émission optique (20) envoie des signaux optiques dans un anneau de fibres optiques (26) placé du côté de la partie de base autour de l'axe de rotation du volant de direction qui est balayé sans contact par au moins un doigt optique (62) placé du côté du volant de direction, relié optiquement aux commutateurs d'éclairage et/ou aux palpeurs d'éclairage (38, 40).

18. Dispositif selon la revendication 17, **caractérisé en ce qu'**il est prévu au moins un et, de préférence, plusieurs doigts optiques (64, 66) placés du côté du volant de direction, qui envoient sans contact les signaux optiques provenant des commutateurs d'éclairage et/ou des palpeurs d'éclairage (38, 40) dans des anneaux de fibres optiques (28, 30) placés du côté de la partie de base autour de l'axe de rotation (12) du volant de direction (14).

19. Dispositif selon la revendication 17 ou 18, **caractérisé en ce que** les anneaux de fibres optiques (26, 28, 30) sont placés dans un plan sur des cercles concentriques autour de l'axe de rotation (12).

20. Dispositif selon la revendication 17, 18 ou 19, **caractérisé en ce que** les anneaux de fibres optiques (26, 28, 30) sont placés sur la partie de base (18, 52) ou sont intégrés dans la partie de base (18, 52).

21. Dispositif selon l'une quelconque des revendications précédentes, **caractérisé en ce que** la au moins une unité d'émission optique (20) est configurée comme une diode électroluminescente ou un phototransistor.

22. Dispositif selon la revendication 21, **caractérisé en ce que** la partie de base (18) est une plaquette de circuit imprimé (52) sur laquelle la diode électroluminescente (20) et/ou les phototransistors (22, 24) sont placés directement ou indirectement.
